Europäisches Patentamt

(19) European Patent Office

Office européen des brevets

(11) Veröffentlichungsnummer: **0 012 378**
**B1**

(12) **EUROPÄISCHE PATENTSCHRIFT**

(45) Veröffentlichungstag der Patentschrift:
14.03.84

(21) Anmeldenummer: **79104970.3**

(22) Anmeldetag: **06.12.79**

(51) Int. Cl.³: **G 01 K 7/30**, G 01 K 7/00,
G 01 K 7/02

(54) **Rauschthermometer-Messfühler.**

(30) Priorität: **15.12.78 DE 2854227**

(43) Veröffentlichungstag der Anmeldung:
**25.06.80 Patentblatt 80/13**

(45) Bekanntmachung des Hinweises auf die Patenterteilung:
**14.03.84 Patentblatt 84/11**

(84) Benannte Vertragsstaaten:
**BE CH FR GB IT NL**

(56) Entgegenhaltungen:
**FR - A - 1 120 823**
**FR - A - 2 227 519**
**GB - A - 719 026**

(73) Patentinhaber: **Kernforschungsanlage Jülich Gesellschaft mit beschränkter Haftung, Postfach 1913, D-5170 Jülich (DE)**

(72) Erfinder: **Brixy, Heinz, Dr., Taubenforst, D-5162 Niederzier (DE)**
Erfinder: **Hofer, Helmut, Rheydter Strasse 180, D-4052 Korschenbroich (DE)**

Rauschthermometer-Meßfühler

Die Erfindung bezieht sich auf einen Rausch-thermometer-Meßfühler, bestehend aus Meß-kopf und direkt an den Meßkopf anschließen-dem, als vieradrige, mineralisolierte Mantelmeß-leitung ausgebildetem Kabel mit vier Zuleitungsdrähten, bei dem ein im Meßkopf befindlicher, für die Messung der Rauschspannung vorgesehener, mittels eines keramischen Stütz- oder Führungselementes in seiner Lage gehaltener Metalldraht nur geringfügig über das Stütz- oder Führungselement hinausragt und an seinen beiden Enden mit jeweils zwei Zuleitungsdrähten verbunden ist.

Meßfühler der vorgenannten Art sind beispielsweise aus der DE-A-2 115 033, der DE-C-2 263 469, der DE-C-2 347 765 und der DE-C-2 320 751 bekannt. Derartige Meßfühler werden zur Temperaturmessung eingesetzt, wobei die infolge der Temperatureinwirkung veränderliche Rauschspannung des elektrischen Widerstandes des Metalldrahtes gemessen wird. Der Metalldraht steht hierzu mit einer Meßeinrichtung in Verbindung, der die Rauschspannung zugeführt wird.

Bei der Herstellung eines Rauschthermometer-Meßfühlers bereitet inbesondere die Ausführung der Übergangsstelle von dem als Rauschwiderstand vorgesehenen Metalldraht zu den Zuleitungen zur Meßelektronik Schwierigkeiten. Es ist daher Aufgabe der Erfindung, einen Rausch-thermometer-Meßfühler der eingangs bezeich-neten Art zu schaffen, bei dem die Zuleitungen zu dem als Rauschwiderstand dienenden Metalldraht möglichst nahe an dem nach Art einer Spirale, einer Wendel oder auch meanderförmig angeordneten Teil des Metalldrahtes heranreichen und die Verbindungsstellen somit nahe an dem vorbezeichneten Teil des Metalldrahtes liegen und der dennoch einfach herstellbar sein soll. Dabei soll ferner eine gute elektrische Isolierung der Verbindungsstellen auch dann gewährleistet sein, wenn der Meßfühler Temperaturen oberhalb etwa 1200° C ausgesetzt ist.

Diese Aufgabe wird bei einem Meßfühler der eingangs bezeichneten Art gemäß der Erfindung dadurch gelöst, daß zur Führung und Isolierung der Enden der Zuleitungsdrähte, zur gegenseitigen Isolation der Verbindungsstellen, zur Abstützung des Stütz- oder Führungselementes sowie zur Aufnahme der Ausdehnungsschleife ein aus keramischem Material bestehendes separates Isolierteil vorgesehen ist, das auf der den Zuleitungsdrähten zugewandten Seite in der Art eines Vierlochröhrchens ausgebildet ist, in welchem die Enden der Zuleitungsdrähte geführt sind, und auf der dem Metalldraht zugewandten Seite einen zwischen den beiden Verbindungsstellen liegenden, zwischen zwei Lochpaaren befindlichen Steg aufweist.

Zwar ist aus der FR-A-1 120 823 bekannt, den Trägerkörper für die Wicklung eines Widerstandsthermometers mit einem »kammartigen«

Vorsprung so auszugestalten, daß die Verbin-dungspunkte zwischen Zuleitung und Wider-standsdraht voneinander isoliert sind. Auch sind aus der GB-A-719 026 Thermoelemente bekannt, bei denen zur Führung und Isolierung der Enden der Zuleitungsdrähte mehrere aus keramischem Material bestehende Isolierteile vorgesehen sind, die in der Art eines Mehrlochröhrchens ausgebildet sind, in welchem die Enden der Zuleitungsdrähte geführt sind. Demgegenüber hat das Isolierteil gemäß der Erfindung durch seine Anordnung zwischen Trägerelement für den Metalldraht und dem Ende des Kabels sowie durch seine besondere Ausgesaltung die Funktion sowohl als Isolierteil für die Zuleitungsenden und die Verbindungsstellen als auch als Stützelement für den Trägerkörper des Rauschwiderstandes als auch als ein Element, das für die Ausdehnungsschleife hinreichend Platz läßt.

Beim Rauschthermometer-Meßfühler gemäß der Erfindung beträgt das Verhältnis der Länge des Steges zur Länge des als Mehrlochröhrchen ausgebildeten Teils des Isolierteils zweckmäßigerweise etwa 3 : 1.

Das Isolierteil ist in einfacher Weise dadurch herzustellen, daß bei einem auf die erforderliche Länge geschnittenen Vierlochröhrchen beispielsweise mit einer Diamantsäge mit zwei zu-einander senkrechten Schnitten Zylinderseg-mente herausgeschnitten werden. In diesem Falle sind zur Isolierung der Verbindungsstellen nach außen hin Halbschalen aus keramischem Material vorgesehen, deren äußerer Radius dem Umfang des als Mehrlochröhrchen ausgebildeten Teils des Isolierteils und deren Länge der Länge des Steges entspricht.

Der Meßfühler gemäß der Erfindung ist in der Zeichnung schematisch wiedergegeben und wird im folgenden näher erläutert. Es zeigt

Fig. 1 einen Rauschthermometer-Meßfühler, bei dem zwei zugleich als Zuleitung zur Meßelektronik vorgesehene Thermoelemente an den Rauschwiderstand angeschlossen sind,

Fig. 2a—2d die im Meßkopf des Rauschthermometer-Meßfühlers gemäß Fig. 1 zur Führung und Isolierung des als Rauschwiderstand dienenden Metalldrahtes und der Zuleitungen vorgesehenen keramischen Bauteile sowie den an den Meßkopf sich anschließenden Teil des Kabels in Längs- und Querschnitt.

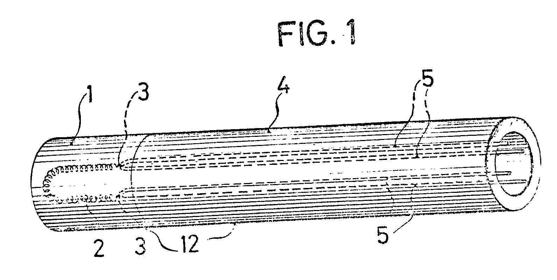

Wie aus Fig. 1 hervorgeht, besteht der Rauschthermometer-Meßfühler aus dem Meßkopf 1 mit als Rauschwiderstand vorgesehenem Metalldraht 2 und Verbindungsstellen 3 der beiden Thermoelemente und dem direkt an den Meßkopf anschließenden, als vieradrige, mine-ralisolierte Mantelmeßleitung ausgebildeten Ka-bel 4 mit den Zuleitungsdrähten 5. Als Material für den Metalldraht, dessen Duchmesser zwi-schen etwa 5 μ und 1 mm liegt, sind je nach den Erfordernissen Reinmetalle, wie Wolfram, Tantal, Niob, Titan, Zirkonium und Platin, oder auch Legierungen von Chrom, Nickel und Eisen vorgesehen. Der Durchmesser des Meßfühlers beträgt je nach Verwendungsfall etwa 1,5–10 mm, die Länge des Meßkopfes etwa 5–30 mm.

Zur Führung und Isolierung von Metalldraht und Zuleitungen sind im Meßkopf eine Reihe von Bauteilen aus keramischem Material vorgesehen, welche in Fig. 2a dargestellt sind. Zur Führung und Halterung des Metalldrahtes 2 ist ein als Mehrlochröhrchen ausgebildetes Teil 6 bzw. 6a vorgesehen, in welchem der Metalldraht 2 meanderförmig so geführt ist, daß seine beiden Enden zur Seite der Zuleitungen aus dem Teil 6 herausragen. Zur Meßführungsspitze hin ist Teil 6 durch eine Isolierscheibe abgedeckt, die als glatte Scheibe 7 oder als Scheibe 7a mit einer Aussparung zur Aufnahme der Meanderbögen des Metalldrahtes ausgebildet sein kann. Die Dicke der Isolierscheibe 7 bzw. 7a beträgt 1–3 mm.

An die Isolierscheibe 8 bzw. 8a schließt sich ein separates Isolierteil 9 an, das zur elektrischen Isolierung der Verbindungsstellen 3 zwischen dem als Rauschwiderstand vorgesehenen Metalldraht mit den Zuleitungsdrähten, zur Aufteilung und Isolierung der Thermoelementdrähte, zur Führung und Isolierung der Zuleitungsdrähte im Bereich der Verbindungsstellen, zur Aufnahme der Ausdehnungsschleife sowie zum Abstützen des Stütz- oder Führungselementes dient. Die Länge des Isolierteils 9 beträgt etwa 10 mm, wobei die Länge des Stegs 9a zur Länge des aus Vierlochrohr ausgebildeten Teils etwa 3 : 1 beträgt.

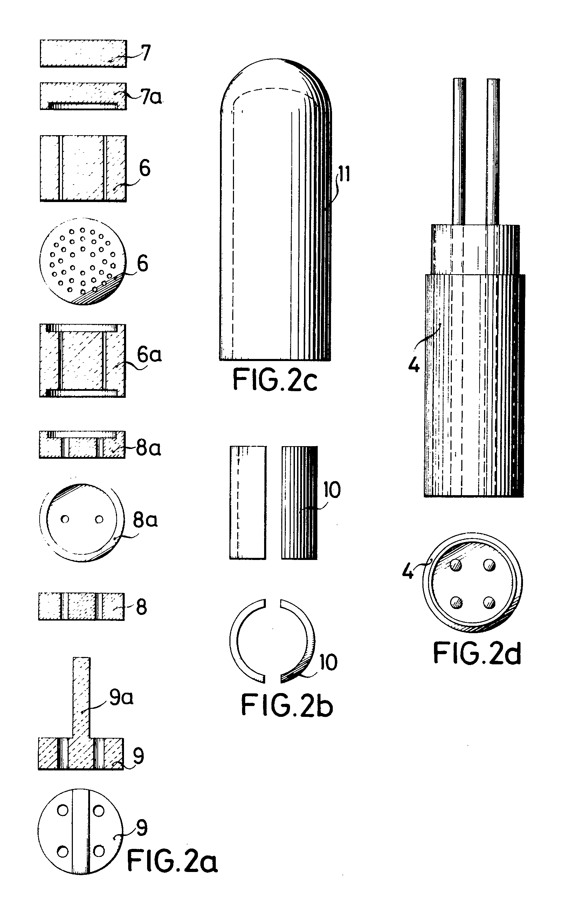

Zur Isolierung der Verbindungsstellen zwischen Metalldraht und den Zuleitungen zum außenliegenden Schutzrohr dienen die in Fig. 2b dargestellten halbschalenförmigen Isolierstücke 10. Sie haben die gleiche Länge wie der Steg 9a von Teil 9.

In Fig. 2d ist der in den Meßkopf hineinragende Teil des Kabels 4 — für den Anschluß in geeigneter Weise präpariert — wiedergegeben. In Fig. 2c ist ein in der Art eines Fingerhutes ausgebildetes Isolierstück 11 dargestellt, welches die in Fig. 2a gezeigten Teile umschließt. Bei Verwendung des Isolierstückes 11 können das Teil 7 bzw. 7a und die Halbschalen 10 entfallen.

Alle verbleibenden Hohlräume im Meßkopf sind mit MgO- bzw. $Al_2O_3$-Pulver aufgefüllt.

Der die vorgenannten keramischen Bauteile aufweisende Meßkopf ist mit einem metallischen Schutzrohr 12, das in Fig. 1 schematisch dargestellt ist, umgeben.

**Patentansprüche**

1. Rauschthermometer-Meßfühler, bestehend aus Meßkopf (1) und direkt an den Meßkopf (1) anschließendem, als vieradrige, mineralisolierte Mantelmeßleitung ausgebildetem Kabel (4) mit vier Zuleitungsdrähten (5), bei dem ein im Meßkopf befindlicher, für die Messung der Rauschspannung vorgesehener, mittels eines keramischen Stütz- oder Führungselementes (6, 6a) in seiner Lage gehaltener Metalldraht (2) nur geringfügig über das Stütz- oder Führungselement (6, 6a) hinausragt und an seinen beiden Enden mit jeweils zwei Zuleitungsdrähten (5) verbunden ist, dadurch gekennzeichnet, daß zur Führung und Isolierung der Enden der Zuleitungsdrähte (5), zur gegenseitigen Isolation der Verbindungsstellen (3), zum Abstützen des Stütz- oder Führungselementes sowie zur Aufnahme der Ausdehnungsschleife ein aus keramischem Material bestehendes separates Isolierteil (9) vorgesehen ist, das auf der den Zuleitungsdrähten (5) zugewandten Seite in der Art eines Vierlochröhrchens ausgebildet ist, in welchem die Enden der Zuleitungsdrähte geführt sind, und auf der dem Metalldraht (2) zugewendeten Seite einen zwischen den beiden Verbindungsstellen liegenden, zwischen zwei Lochpaaren befindlichen Steg (9a) aufweist.

2. Rauschthermometer-Meßfühler nach Anspruch 1, dadurch gekennzeichnet, daß das Verhältnis der Länge des Steges (9a) zur Länge des als Vierlochröhrchen ausgebildeten Teils des Isolierteils (9) etwa 3 : 1 beträgt.

3. Rauschthermometer-Meßfühler nach Anspruch 1 oder 2, dadurch gekennzeichnet, daß zur Isolierung der Verbindungsstellen (3) nach außen hin Halbschalen (10) aus keramischem Material vorgesehen sind, deren äußerer Radius dem Umfang des als Vierlochröhrchen ausgebildeten Teils des Isolierteils (9) und deren Länge der Länge des Steges (9a) entspricht.

**Claims**

1. Noise thermometer sensor, consisting of a sensing head (1) and a cable (4) which directly adjoins the sensing head (1), is formed as a sheathed, mineral-insulated four-core measuring line with four feed wires (5) and in which a metal wire (2) located in the sensing head, intended for measuring the noise voltage and held in its position by means of a ceramic carrier or guide element (6, 6a) projects only slightly beyond the carrier or guide element (6, 6a) and is connected at each of its two ends to two feed wires (5), characterised in that, for guiding and insulating the ends of the feed wires (5), for mutually insulating the junctions (3), for supporting the carrier or guide element and for receiving the expansion loop, a separate insulating part (9) is provided which consists of a ceramic material and, on the side facing the feed wires (5), is formed in the manner of a four-hole tubule, wherein the ends of the feed wires are guided, and, on the side facing the metal wire (2), has a web (9a) lying between the two junctions and located between two pairs of holes.

2. Noise thermometer sensor according to Claim 1, characterised in that the ratio of the length of the web (9a) to the length of the portion, formed as a four-hole tubule, of the insulating part (9) is about 3 : 1.

3. Noise thermometer sensor according to Claim 1 or 2, characterised in that, for the outward insulation of the junctions (3), half-shells (10) are provided which consist of a ceramic material and the outer radius of which corresponds to the circumference of the portion, formed as a four-hole tubule, of the insulating part (9) and the length of which corresponds to the length of the web (9a).

**Revendications**

1. Sonde de mesure pour un thermomètre psophométrique, constitué d'une tête de mesure (1) d'un cable quadrifilaire (4) agencé en conducteur à gaine de mesure, isolée par une matière minérale, et pourvue de quatre fils d'amenée (5), dans laquelle un fil métallique (2), se trouvant dans la tête de mesure, prévu pour la mesure de la tension de bruit et maintenu en position au moyen d'un élément d'appui ou de guidage (6, 6a) en céramique, ne fait saillie que légèrement au-delà de l'élément d'appui ou guidage (6, 6a) et est relié par ses deux extrémités respectivement à deux fils d'amenée (5), caractérisée en ce que pour guidage et pour l'isolation des extrémités des fils d'amenée (5), pour l'isolation mutuelle des points de liaison (3), pour soutenir l'élément d'appui ou de guidage, ainsi que pour la réception de la boucle de dilatation, il est prévu une pièce isolante (9) distincte, en un matériau céramique, et qui est agencée sur la partie située du côté des fils d'amenée (5), à la manière d'un petit tube à quatre trous, dans lequel sont guidées les extrémités des fils d'amenée, et qui présente sur la partie du côté du fil metallique (2), une barrette (9a) interposée entre les deux points de liaison et se trouvant entre deux couples de trous.

2. Sonde de mesure pour thermomètre psophométrique suivant la revendication 1, caractérisée en ce que le rapport de la longueur de la barrette (9a) à la longueur de la partie de pièce isolante (9) agencée en petit tube à quatre trous est d'environ 3 : 1.

3. Sonde de mesure pour thermomètre psophométrique suivant la revendication 1 ou 2, caractérisée en ce que, pur l'isolation des points de liaison (3) vers l'extérieur sont prévues des hémi-coquilles (10) en matériau céramique dont la rayon extérieur correspond au pourtour de la partie de la pièce isolante (9) agencée en petit tube à quatre trous et dont la longueur correspond à la longueur de la barrette (9a).

# FIG. 1

7

FIG.2c

FIG.2d

FIG.2b

FIG.2a